# FASCICULE DE BREVET EUROPEEN

(11) **EP 3 670 962 B1**
(45) Date de publication et mention de la délivrance du brevet: **07.10.2026**
(21) Numéro de dépôt: 19218067.7
(22) Date de dépôt: 19.12.2019
(51) Int. Cl.: F16H 1/46, F16H 1/28

(54) **ACTIONNEUR ÉLECTROMÉCANIQUE ET INSTALLATION COMPRENANT UN TEL ACTIONNEUR**
ELEKTROMECHANISCHES STELLGLIED UND ANLAGE, DIE EIN SOLCHES STELLGLIED UMFASST
ELECTROMECHANICAL ACTUATOR AND INSTALLATION COMPRISING SUCH AN ACTUATOR

(30) Priorité: 20.12.2018 FR 1873618
(43) Date de publication de la demande: 24.06.2020
(73) Titulaire: Somfy Activites SA, 74300 Cluses (FR)
(72) Inventeur: SOURAIN, Rémi, 74300 Cluses (FR)
(74) Mandataire: Lavoix

(56) Documents cités:
- EP-A1- 3 203 112
- WO-A2-2006/107602
- US-B1- 10 080 919

## Description

La présente invention concerne un actionneur électromécanique pour une installation de fermeture, d'occultation ou de protection solaire. L'actionneur électromécanique comprend un réducteur pourvu d'au moins un étage de réduction de type épicycloïdal.

La présente invention concerne également une installation de fermeture, d'occultation ou de protection solaire comprenant un écran enroulable sur un tube d'enroulement entraîné en rotation par un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà des actionneurs électromécaniques pour une installation de fermeture, d'occultation ou de protection solaire comprenant un moteur électrique et un réducteur. Le réducteur comprend un arbre d'entrée, une pluralité d'étages de réduction de type épicycloïdal, une couronne et un arbre de sortie. Chaque étage de réduction comprend un pignon planétaire, une pluralité de pignons satellites et une couronne. Au niveau de chaque étage de réduction, le pignon planétaire est engrené avec chaque pignon satellite, dans une configuration assemblée du réducteur. La couronne comprend une denture interne. Chaque pignon satellite est engrené avec la denture interne de la couronne, dans la configuration assemblée du réducteur. En outre, chaque pignon satellite est monobloc et comprend une denture réalisée en une seule partie. Par ailleurs, le pignon planétaire, les pignons satellites et la couronne sont réalisés dans une matière métallique identique.

Cependant, ces actionneurs électromécaniques présentent l'inconvénient de générer une pression de contact non uniforme suivant une longueur de prise de chaque pignon satellite avec le pignon planétaire, voire une absence de pression de contact à une extrémité de chaque pignon satellite, en particulier au niveau d'un dernier étage de réduction du réducteur, lorsque l'arbre d'entrée du réducteur est entraîné en rotation par une activation du moteur électrique de l'actionneur électromécanique. Le dernier étage de réduction est l'étage de réduction disposé au plus près d'un arbre de sortie de l'actionneur électromécanique, dans une configuration assemblée de l'actionneur électromécanique.

En outre, ces actionneurs électromécaniques présentent l'inconvénient de n'utiliser qu'une partie de la longueur de prise du pignon planétaire avec les pignons satellites pour transmettre un effort entre le pignon planétaire et les pignons satellites, lorsque l'arbre d'entrée du réducteur est entraîné en rotation par une activation du moteur électrique de l'actionneur électromécanique.

Par conséquent, une usure de la denture de chaque pignon satellite est constatée sur seulement une partie de la longueur de prise de chaque pignon satellite avec le pignon planétaire.

En outre, une telle répartition non uniforme de la pression de contact suivant la longueur de prise de chaque pignon satellite avec le pignon planétaire engendre une contrainte excessive sur une denture du pignon planétaire, pouvant provoquer une casse de la denture du pignon planétaire.

Par ailleurs, une telle construction des étages de réduction du réducteur et, plus particulièrement, du dernier étage de réduction engendre une répartition non optimale des efforts entre deux points de contact suivant la longueur de prise de chaque pignon satellite avec le pignon planétaire, lorsque l'arbre d'entrée du réducteur est entraîné en rotation par une activation du moteur électrique de l'actionneur électromécanique.

Pour remédier à une telle situation, il peut être envisagé, de manière classique, de rigidifier l'ensemble des éléments constituant le réducteur, notamment le pignon planétaire, les pignons satellites et la couronne, de sorte à limiter une déformation angulaire de ces éléments.

Néanmoins, une telle rigidification des éléments constituant le réducteur ne permet pas de résoudre les inconvénients mentionnés préalablement, puisqu'une usure de la denture de chaque pignon satellite peut être constatée.

Le document WO 2006/107602 A2 décrit un actionneur électromécanique pour une installation de fermeture, d'occultation ou de protection solaire. L'actionneur électromécanique comprend un moteur électrique et un réducteur. Le réducteur comprend deux étages de réduction de type épicycloïdal. Le premier étage de réduction comprend un pignon planétaire, une couronne et une pluralité de pignons satellites. La couronne comprend une denture interne. Le pignon planétaire est configuré pour coopérer avec chaque pignon satellite, dans une configuration assemblée du réducteur, et chaque pignon satellite est engrené avec la denture interne de la couronne, dans la configuration assemblée du réducteur. Le deuxième étage de réduction présente les mêmes caractéristiques que celles du premier étage de réduction. En outre, un arbre de sortie du moteur électrique est accouplé au pignon planétaire du premier étage de réduction.

Le document EP 3 203 112 A1 décrit un réducteur configuré pour être accouplé à un moteur électrique. Le réducteur comprend deux étages de réduction de type épicycloïdal. Le premier étage de réduction comprend un pignon planétaire, une couronne et une pluralité de pignons satellites. La couronne comprend une première denture interne. Le pignon planétaire est configuré pour coopérer avec chaque pignon satellite, dans une configuration assemblée du réducteur, et chaque pignon satellite est engrené avec la première denture interne de la couronne, dans la configuration assemblée du réducteur. Le deuxième étage de réduction comprend un pignon planétaire, une couronne, en l'occurrence la même que celle du premier étage de réduction, une pluralité de premiers pignons satellites et une pluralité de seconds pignons satellites. La couronne comprend une deuxième denture interne. Le pignon planétaire est configuré pour coopérer avec chaque pignon satellite, dans une configuration assemblée du réducteur, et chaque pignon satellite est engrené avec la deuxième denture interne de la couronne, dans la configuration assemblée du réducteur. En outre, le moteur électrique est accouplé au pignon planétaire du premier étage de réduction. Par ailleurs, les premier et deuxième pignons satellites du deuxième étage de réduction constituent une première partie de denture et une deuxième partie de denture. Les premier et deuxième pignons satellites sont séparés l'un par rapport à l'autre, suivant une direction parallèle à un axe de rotation du réducteur, et reliés entre eux par un élément additionnel.

La présente invention a pour but de résoudre les inconvénients précités et de proposer un actionneur électromécanique pour une installation de fermeture, d'occultation ou de protection solaire comprenant un réducteur pourvu d'au moins un étage de réduction de type épicycloïdal, ainsi qu'une installation de fermeture, d'occultation ou de protection solaire comprenant un tel actionneur électromécanique, permettant d'améliorer une répartition de pression de contact, suivant une longueur de prise de pignons satellites avec un pignon planétaire.

A cet égard, la présente invention vise, selon un premier aspect, un actionneur électromécanique pour une installation de fermeture, d'occultation ou de protection solaire comprenant au moins :
un moteur électrique, et
un réducteur, le réducteur comprenant un arbre d'entrée,

le réducteur comprenant au moins un étage de réduction de type épicycloïdal,
ledit au moins un étage de réduction comprenant au moins :
   un pignon planétaire,
   une couronne, la couronne comprenant une denture interne, et
   une pluralité de pignons satellites,
le pignon planétaire coopérant avec chaque pignon satellite et chaque pignon satellite étant engrené avec la denture interne de la couronne.

Selon l'invention, chaque pignon satellite comprend au moins une première partie de denture et une deuxième partie de denture. Les première et deuxième parties de denture de chaque pignon satellite sont séparées l'une par rapport à l'autre, suivant une direction parallèle à un axe de rotation du réducteur, de sorte à permettre un décalage angulaire entre celles-ci, lorsque l'arbre d'entrée du réducteur est entraîné en rotation. Le pignon planétaire et les pignons satellites sont réalisés dans une première matière. La couronne est réalisée dans une deuxième matière. La rigidité de la première matière du pignon planétaire et des pignons satellites est supérieure à la rigidité de la deuxième matière de la couronne, la rigidité de la première matière du pignon planétaire et des pignons satellites et la rigidité de la deuxième matière de la couronne étant définies par les modules d'Young de ces matières. La rigidité de la première matière du pignon planétaire et des pignons satellites et la rigidité de la deuxième matière de la couronne sont exprimées en mégapascals (MPa), le module d'Young de la première matière du pignon planétaire et des pignons satellites étant compris entre 100000 et 250000 MPa et le module d'Young de la deuxième matière de la couronne étant compris entre 1000 et 20000 MPa. En outre, la première matière du pignon planétaire et des pignons satellites est une matière métallique et la deuxième matière de la couronne est une matière plastique, de telle sorte que la couronne est déformée de manière accrue, par rapport au pignon planétaire et aux pignons satellites, lorsque l'arbre d'entrée du réducteur est entraîné en rotation.

Ainsi, l'utilisation de la première partie de denture séparée de la deuxième partie de denture pour chaque pignon satellite combinée à l'utilisation de la première matière pour le pignon planétaire et les pignons satellites et de la deuxième matière pour la couronne, de rigidités différentes, permet de garantir une pression de contact répartie de manière uniforme, suivant une longueur de prise de chaque pignon satellite avec le pignon planétaire.

De cette manière, la répartition uniforme de la pression de contact, suivant la longueur de prise de chaque pignon satellite avec le pignon planétaire, est obtenue par la séparation des première et deuxième parties de denture de chaque pignon satellite. Cette séparation des première et deuxième parties de denture de chaque pignon satellite permet un décalage angulaire entre celles-ci, lorsque l'arbre d'entrée du réducteur est entraîné en rotation, notamment lors d'une activation du moteur électrique de l'actionneur électromécanique.

En outre, la répartition uniforme de la pression de contact, suivant la longueur de prise de chaque pignon satellite avec le pignon planétaire, est obtenue par la différence de matière de la couronne par rapport au pignon planétaire et aux pignons satellites et, plus particulièrement, par la souplesse de la couronne réalisée dans la deuxième matière par rapport à la rigidité du pignon planétaire et des pignons satellites réalisés dans la première matière. Cette différence de matière de la couronne par rapport au pignon planétaire et aux pignons satellites permet de déformer de manière accrue la couronne, lorsqu'un arbre d'entrée du réducteur est entraîné en rotation, notamment lors d'une activation du moteur électrique de l'actionneur électromécanique.

Par ailleurs, une telle construction de l'étage de réduction du réducteur engendre que les première et deuxième parties de denture de chaque pignon satellite suivent la déformation de la couronne, lorsque l'arbre d'entrée du réducteur est entraîné en rotation, notamment lors d'une activation du moteur électrique de l'actionneur électromécanique.

De cette manière, une telle construction de l'étage de réduction du réducteur permet d'éviter qu'au moins l'un des pignons satellites se mette en biais par rapport à son axe de rotation, lorsque l'arbre d'entrée du réducteur est entraîné en rotation, notamment lors d'une activation du moteur électrique de l'actionneur électromécanique.

Selon un exemple de réalisation, la matière métallique du pignon planétaire et des pignons satellites est un acier fritté.

En variante, la matière métallique du pignon planétaire et des pignons satellites est un acier taillé.

Selon une caractéristique avantageuse de l'invention, la matière plastique de la couronne est un polyamide.

Selon une autre caractéristique avantageuse de l'invention, les première et deuxième parties de denture de chaque pignon satellite sont distinctes, de sorte à former respectivement une première pièce et une deuxième pièce.

Selon une autre caractéristique avantageuse de l'invention, la première partie de denture comprend une première zone de contact. La deuxième partie de denture comprend une deuxième zone de contact. En outre, la première zone de contact de la première partie de denture est en appui contre la deuxième zone de contact de la deuxième partie de denture, de sorte à former un espace entre les dents de la première partie de denture et les dents de la deuxième partie de denture.

Selon une autre caractéristique avantageuse de l'invention, chacune des première et deuxième zones de contact des première et deuxième parties de denture est plus proche d'un axe de rotation du réducteur que les dents des première et deuxième parties de denture de chaque pignon satellite en prise avec les dents de la denture interne de la couronne.

Selon une autre caractéristique avantageuse de l'invention, les première et deuxième parties de denture de chaque pignon satellite sont engrenées avec la denture interne de la couronne.

La présente invention vise, selon un deuxième aspect, une installation de fermeture, d'occultation ou de protection solaire comprenant un écran enroulable sur un tube d'enroulement entraîné en rotation par un actionneur électromécanique conforme à l'invention.

Cette installation présente des caractéristiques et avantages analogues à ceux décrits précédemment en relation avec l'actionneur électromécanique selon l'invention, tel que mentionné ci-dessus.

D'autres particularités et avantages de l'invention apparaîtront encore dans la description ci-après.

Aux dessins annexés, donnés à titre d'exemples non limitatifs :
[Fig 1] la figure 1 est une vue schématique en coupe transversale d'une installation conforme à un premier mode de réalisation de l'invention ;
[Fig 2] la figure 2 est une vue schématique en perspective de l'installation illustrée à la figure 1 ;
[Fig 3] la figure 3 est une vue schématique en coupe axiale et partielle de l'installation illustrée aux figures 1 et 2, montrant un actionneur électromécanique de l'installation ;
[Fig 4] la figure 4 est une vue schématique d'un réducteur de l'actionneur électromécanique illustré à la figure 3 ;
[Fig 5] la figure 5 est une vue schématique en perspective et éclatée du réducteur illustré à la figure 4 ;
[Fig 6] la figure 6 est une vue schématique partielle du réducteur illustré aux figures 4 et 5 ;
[Fig 7] la figure 7 est une vue schématique partielle d'un troisième étage de réduction du réducteur illustré aux figures 4 à 6, représentant un décalage angulaire d'une première partie de denture d'un pignon satellite par rapport à une deuxième partie de denture dudit pignon satellite ;
[Fig 8] la figure 8 est une vue analogue à la figure 4 illustrant un réducteur d'un actionneur électromécanique selon un deuxième mode de réalisation ; et
[Fig 9] la figure 9 est une vue schématique éclatée du réducteur illustré à la figure 8.

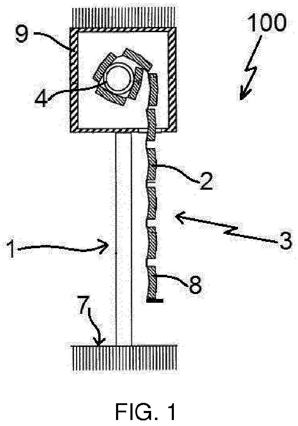

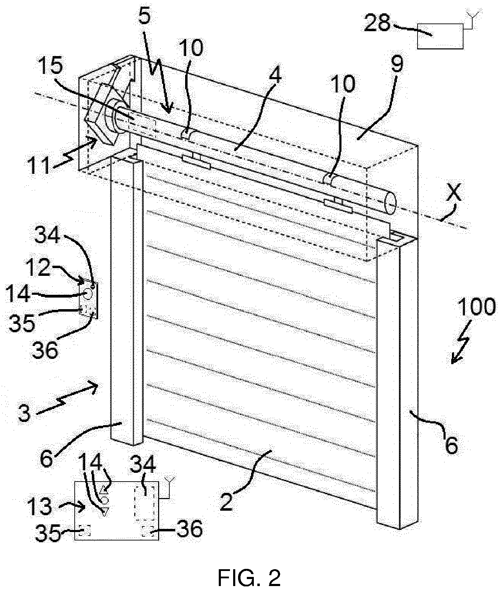

On décrit tout d'abord, en référence aux figures 1 et 2, une installation 100 conforme à un premier mode de réalisation de l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. La présente invention s'applique à tous les types de dispositif d'occultation.

Ici, l'installation 100 comprend le dispositif d'occultation 3.

On décrit, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5. L'écran 2 est mobile entre une position enroulée, en particulier haute, et une position déroulée, en particulier basse.

Ici, l'installation 100 comprend le dispositif d'entraînement motorisé 5.

L'écran 2 mobile du dispositif d'occultation 3 est un écran de fermeture, d'occultation et/ou de protection solaire, s'enroulant sur le tube d'enroulement 4 dont le diamètre intérieur est sensiblement supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à déplacer, en particulier dérouler ou enrouler, l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12.

L'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

Le dispositif d'entraînement motorisé 5 est, de préférence, configuré pour exécuter les commandes de déplacement, notamment de déroulement ou d'enroulement, de l'écran 2 du dispositif d'occultation 3, pouvant être émises, notamment, par l'unité de commande locale 12 ou l'unité de commande centrale 13.

L'installation 100 comprend soit l'unité de commande locale 12, soit l'unité de commande centrale 13, soit l'unité de commande locale 12 et l'unité de commande centrale 13.

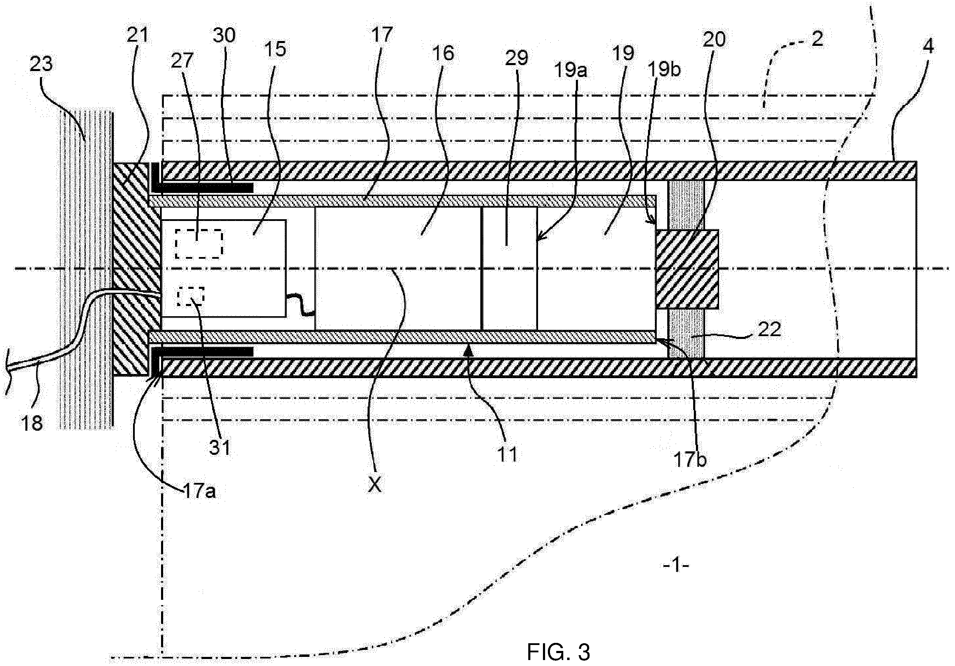

On décrit à présent, plus en détail et en référence à la figure 3, le dispositif d'entraînement motorisé 5, y compris l'actionneur électromécanique 11, appartenant à l'installation 100 des figures 1 et 2.

L'actionneur électromécanique 11 comprend un moteur électrique 16.

Avantageusement, le moteur électrique 16 comprend un rotor et un stator, non représentés et positionnés de manière coaxiale autour d'un axe de rotation X, qui est également l'axe de rotation du tube d'enroulement 4 en configuration montée du dispositif d'entraînement motorisé 5.

Des moyens de commande de l'actionneur électromécanique 11, permettant le déplacement de l'écran 2 du dispositif d'occultation 3, sont constitués par au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

L'unité électronique de contrôle 15 comprend au moins un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

L'unité électronique de contrôle 15, l'unité de commande locale 12 et/ou l'unité de commande centrale 13 peuvent être en communication avec une station météorologique déportée à l'extérieur du bâtiment, incluant, notamment, un ou plusieurs capteurs pouvant être configurés pour déterminer, par exemple, une température, une luminosité ou encore une vitesse de vent.

L'unité électronique de contrôle 15, l'unité de commande locale 12 et/ou l'unité de commande centrale 13 peuvent également être en communication avec un serveur 28, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 ou centrale 13. L'unité de commande locale 12 ou centrale 13 est pourvue d'un clavier de commande. Le clavier de commande de l'unité de commande locale 12 ou centrale 13 comprend un ou plusieurs éléments de sélection 14 et, éventuellement, un ou plusieurs éléments d'affichage 34.

A titre d'exemples nullement limitatifs, les éléments de sélection peuvent être des boutons poussoirs ou des touches sensitives, les éléments d'affichage peuvent être des diodes électroluminescentes, un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

L'unité de commande locale 12 ou centrale 13 comprend au moins un deuxième module de communication 36.

Ainsi, le deuxième module de communication 36 de l'unité de commande locale 12 ou centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou centrale 13 peut également être configuré pour recevoir, autrement dit reçoit, des ordres de commande, en particulier par l'intermédiaire des mêmes moyens.

Le deuxième module de communication 36 de l'unité de commande locale 12 ou centrale 13 est configuré pour communiquer, autrement dit communique, avec le premier module de communication 27 de l'unité électronique de contrôle 15.

Ainsi, le deuxième module de communication 36 de l'unité de commande locale 12 ou centrale 13 échange des ordres de commande avec le premier module de communication 27 de l'unité électronique de contrôle 15, soit de manière monodirectionnelle soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face d'un cadre dormant d'une fenêtre ou d'une porte. Un point de commande nomade peut être une télécommande, un téléphone intelligent ou une tablette.

Avantageusement, l'unité de commande locale 12 ou centrale 13 comprend également un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur et/ou à un signal provenant d'une horloge de l'unité électronique de contrôle 15, en particulier du microcontrôleur 31. Le capteur et/ou l'horloge peuvent être intégrés à l'unité de commande locale 12 ou à l'unité de commande centrale 13.

L'actionneur électromécanique 11 est alimenté en énergie électrique par un réseau d'alimentation électrique du secteur, ou encore au moyen d'une batterie, pouvant être rechargée, par exemple, par un panneau photovoltaïque.

Ici, l'actionneur électromécanique 11 comprend un câble d'alimentation électrique 18 permettant son alimentation en énergie électrique à partir d'un réseau d'alimentation électrique du secteur.

Un carter 17 de l'actionneur électromécanique 11 est, préférentiellement, de forme cylindrique.

Dans un mode de réalisation, le carter 17 est réalisé dans un matériau métallique.

La matière du carter de l'actionneur électromécanique n'est pas limitative et peut être différente. Il peut s'agir, en particulier, d'une matière plastique.

L'actionneur électromécanique 11 comprend également un réducteur 19.

Avantageusement, l'actionneur électromécanique 11 comprend également un frein 29 et un arbre de sortie 20.

A titre d'exemple nullement limitatif, le frein 29 peut être un frein à ressort, un frein à came ou un frein électromagnétique.

Ici et comme visible à la figure 3, le frein 29 est disposé entre le moteur électrique 16 et le réducteur 19, c'est-à-dire à la sortie du moteur électrique 16.

En variante, non représentée, le frein 29 peut être disposé à la sortie du réducteur 19, autrement dit entre le réducteur 19 et l'arbre de sortie 20.

L'actionneur électromécanique 11 peut également comprendre un dispositif de détection de fin de course et/ou d'obstacle, pouvant être mécanique ou électronique.

Avantageusement, le moteur électrique 16, le frein 29 et le réducteur 19 sont montés à l'intérieur du carter 17 de l'actionneur électromécanique 11.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen d'une couronne 30 insérée autour d'une première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend un support de couple 21. Le support de couple 21 est en saillie au niveau de la première extrémité 17a du carter 17 de l'actionneur électromécanique 11, en particulier l'extrémité 17a du carter 17 recevant la couronne 30. Le support de couple 21 de l'actionneur électromécanique 11 permet ainsi de fixer l'actionneur électromécanique 11 sur un bâti 23, en particulier à une joue du coffre 9.

En outre, le support de couple 21 de l'actionneur électromécanique 11 peut permettre d'obturer la première extrémité 17a du carter 17.

Par ailleurs, le support de couple 21 de l'actionneur électromécanique 11 peut permettre de supporter l'unité électronique de contrôle 15. L'unité électronique de contrôle 15 peut être alimentée en énergie électrique au moyen du câble d'alimentation électrique 18.

Ici, et tel qu'illustré à la figure 3, l'unité électronique de contrôle 15 est ainsi disposée, autrement dit intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le bâti 23 ou dans le support de couple 21.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

Avantageusement, l'arbre de sortie 20 de l'actionneur électromécanique 11 est configuré pour entraîner en rotation un élément de liaison 22 relié au tube d'enroulement 4. L'élément de liaison 22 est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

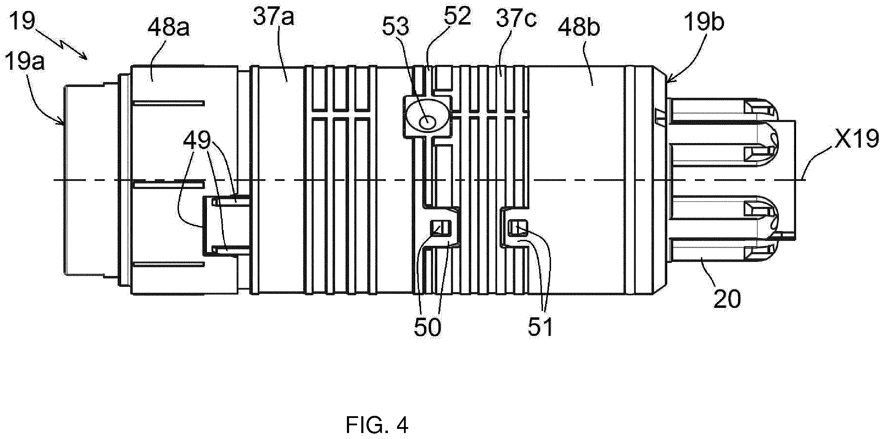

On décrit à présent, en référence aux figures 4 à 7, le réducteur 19 de l'actionneur électromécanique 11, illustré à la figure 3 et conforme à un premier mode de réalisation de l'invention.

Le réducteur 19 comprend au moins un étage de réduction 25a, 25b, 25c de type épicycloïdal.

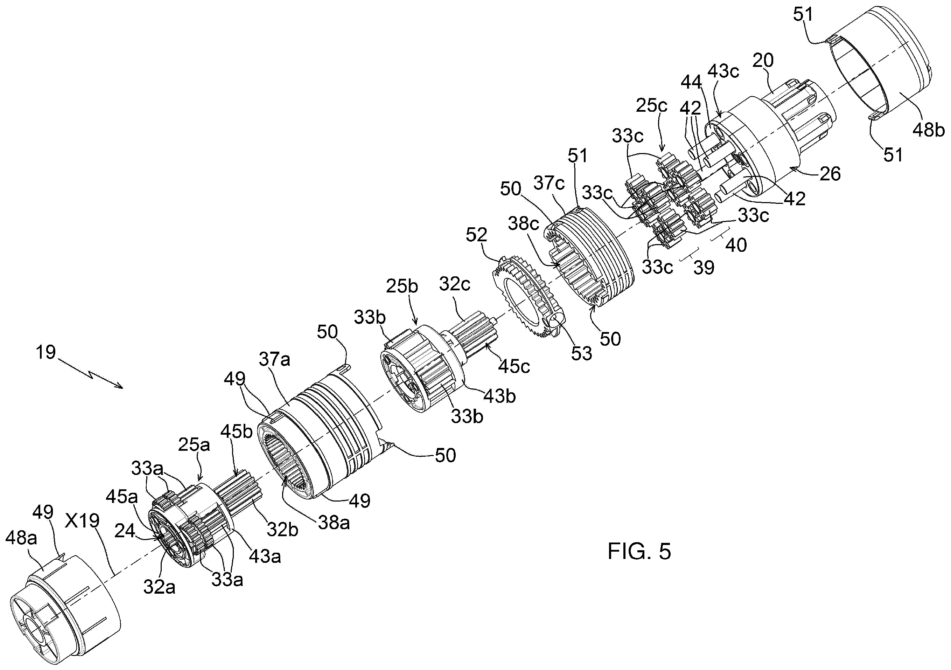

Ici et comme illustré à la figure 5, le réducteur 19 comprend trois étages de réduction 25a, 25b, 25c. Chacun des trois étages de réduction 25a, 25b, 25c est de type épicycloïdal. Les trois étages de réduction 25a, 25b, 25c sont appelés par la suite premier étage de réduction 25a, deuxième étage de réduction 25b et troisième étage de réduction 25c.

Le nombre d'étages de réduction du réducteur n'est pas limitatif. Le nombre d'étages de réduction peut être de un, de deux ou supérieur ou égal à quatre.

Ici, le premier étage de réduction 25a est disposé au niveau d'une première extrémité 19a du réducteur 19 faisant face au moteur électrique 16, dans une configuration assemblée de l'actionneur électromécanique 11. Le troisième étage de réduction 25c est disposé au niveau d'une deuxième extrémité 19b du réducteur 19 faisant face à l'arbre de sortie 20 de l'actionneur électromécanique 11, dans la configuration assemblée de l'actionneur électromécanique 11. En outre, le deuxième étage de réduction 25b est disposé entre le premier étage de réduction 25a et le troisième étage de réduction 25c.

Le troisième étage de réduction 25c comprend au moins un pignon planétaire 32c et une pluralité de pignons satellites 33c.

Dans le cas illustré à la figure 5, chaque étage de réduction 25a, 25b, 25c comprend au moins un pignon planétaire 32a, 32b, 32c et une pluralité de pignons satellites 33a, 33b, 33c.

Le pignon planétaire 32a et les pignons satellites 33a du premier étage de réduction 25a sont appelés par la suite premier pignon planétaire et premiers pignons satellites. Le pignon planétaire 32b et les pignons satellites 33b du deuxième étage de réduction 25b sont appelés par la suite deuxième pignon planétaire et deuxièmes pignons satellites. En outre, le pignon planétaire 32c et les pignons satellites 33c du troisième étage de réduction 25c sont appelés par la suite troisième pignon planétaire et troisièmes pignons satellites.

Ici et comme illustré à la figure 5, le premier étage de réduction 25a comprend neuf premiers pignons satellites 33a régulièrement répartis, en particulier par groupes de trois, autour d'un axe de rotation X19 du réducteur 19. Seuls six premiers pignons satellites 33a sont visibles à la figure 5. Le deuxième étage de réduction 25b comprend trois deuxièmes pignons satellites 33b régulièrement répartis autour de l'axe de rotation X19 et dont seuls deux sont visibles à la figure 5. En outre, le troisième étage de réduction 25c comprend cinq troisièmes pignons satellites 33c régulièrement répartis autour de l'axe de rotation X19.

Le nombre de pignons satellites d'un étage de réduction n'est pas limitatif et peut être différent. Le nombre de pignons satellites d'un étage de réduction peut être de deux ou plus.

Avantageusement, le troisième pignon planétaire 32c du troisième étage de réduction 25c comprend une denture 45c.

Dans le cas présent illustré à la figure 5, le pignon planétaire 32a, 32b, 32c de chaque étage de réduction 25a, 25b, 25c comprend une denture 45a, 45b, 45c.

Dans le troisième étage de réduction 25c, le troisième pignon planétaire 32c est configuré pour coopérer et, notamment, est engrené, autrement dit configuré pour être engrené, avec chaque troisième pignon satellite 33c, dans la configuration assemblée du réducteur 19.

De même, dans chacun des premier et deuxième étages de réduction 25a, 25b, le pignon planétaire 32a, 32b est engrené, autrement dit configuré pour être engrené, avec chaque pignon satellite 33a, 33b, dans la configuration assemblée du réducteur 19.

Ainsi, le troisième pignon planétaire 32c du troisième étage de réduction 25c et, dans le cas présent, le pignon planétaire 32a, 32b, 32c de chaque étage de réduction 25a, 25b, 25c, est en prise, autrement dit configuré pour être en prise, avec chaque pignon satellite 33a, 33b, 33c de cet étage de réduction 25a, 25b, 25c, dans la configuration assemblée du réducteur 19.

En variante, non représentée, le troisième pignon planétaire 32c du troisième étage de réduction 25c peut être un galet lisse configuré pour coopérer par friction avec chaque troisième pignon satellite 33c, dans la configuration assemblée du réducteur 19.

Avantageusement, les troisièmes pignons satellites 33c du troisième étage de réduction 25c sont identiques.

Avantageusement, dans chacun des premier et deuxième étages de réduction 25a, 25b, les premiers et deuxièmes pignons satellites 33a, 33b de chaque étage de réduction 25a, 25b sont identiques, en particulier au moins par groupes de pignons satellites d'un étage de réduction, comme représenté au premier étage de réduction 25a à la figure 5.

Les troisièmes pignons satellites 33c du troisième étage de réduction 25c sont excentrés par rapport à l'axe de rotation X19 du réducteur 19 et, plus particulièrement, par rapport au troisième pignon planétaire 32c de cet étage de réduction 25c.

De même, dans chacun des premier et deuxième étages de réduction 25a, 25b, les premiers et deuxièmes pignons satellites 33a, 33b de chaque étage de réduction 25a, 25b sont excentrés par rapport à l'axe de rotation X19 du réducteur 19 et, plus particulièrement, par rapport au premier ou deuxième pignon planétaire 32a, 32b de cet étage de réduction 25a, 25b.

Ainsi, pour un étage de réduction 25a, 25b, 25c donné, un axe de rotation de chaque pignon satellite 33a, 33b, 33c est parallèle à l'axe de rotation X19 du réducteur 19 et, plus particulièrement, à un axe de rotation du pignon planétaire 32a, 32b, 32c.

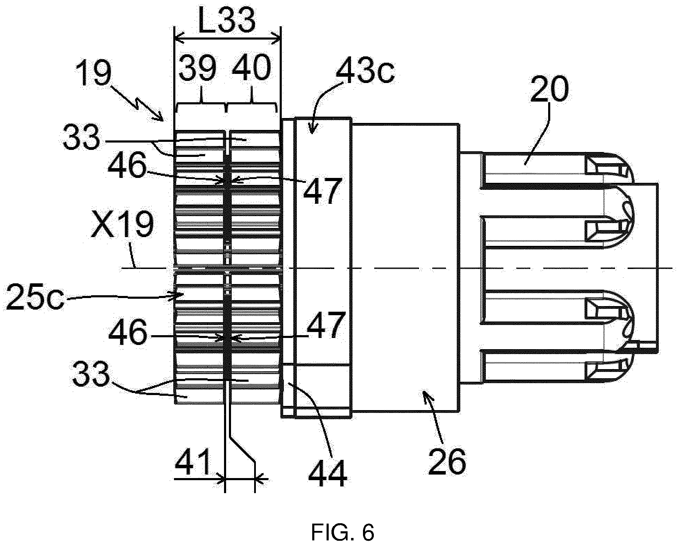

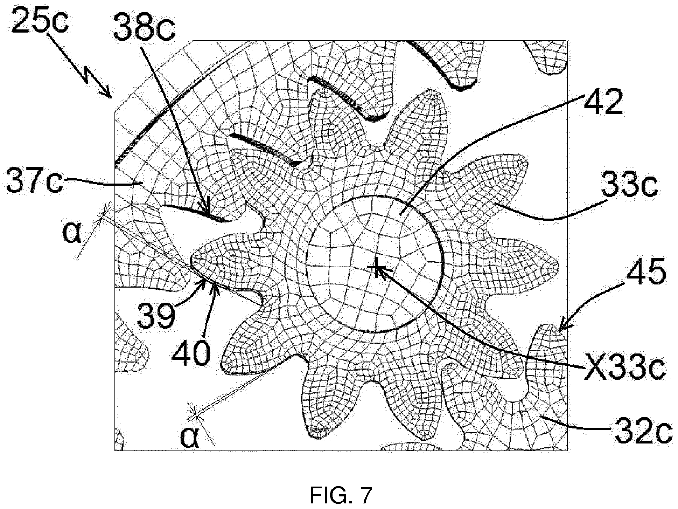

Les axes de rotation de chaque pignon satellite 33a, 33b, 33c et du pignon planétaire associé 32a, 32b, 32c ne sont pas représentés, de sorte à simplifier la lecture des figures 5 et 6, sauf l'axe de rotation X33c d'un troisième pignon satellite 33c visible à la figure 7.

Le réducteur 19 comprend un arbre d'entrée 24.

Ici et comme illustré à la figure 5, le premier pignon planétaire 32a du premier étage de réduction 25a constitue l'arbre d'entrée 24 du réducteur 19.

En variante, non représentée, le premier pignon planétaire 32a du premier étage de réduction 25a est porté par l'arbre d'entrée 24 du réducteur 19.

Le réducteur 19 comprend également un arbre de sortie 26.

Ici et comme illustré aux figures 5 et 6, l'arbre de sortie 20 de l'actionneur électromécanique 11 constitue l'arbre de sortie 26 du réducteur 19.

En variante, non représentée, l'arbre de sortie 20 de l'actionneur électromécanique 11 est porté par l'arbre de sortie 26 du réducteur 19.

Avantageusement, l'arbre d'entrée 24 et l'arbre de sortie 26 du réducteur 19 sont coaxiaux, dans une configuration assemblée du réducteur 19.

Ainsi, les arbres d'entrée et de sortie 24, 26 du réducteur 19 sont disposés suivant le même axe de rotation X19, qui est également l'axe de rotation du réducteur 19, dans la configuration assemblée du réducteur 19.

Le réducteur 19 comprend au moins une couronne 37a, 37c.

Ici et comme illustré à la figure 5, le réducteur 19 comprend deux couronnes 37a, 37c. Les deux couronnes 37a, 37c sont appelées par la suite première couronne 37a et deuxième couronne 37c.

Chacune des première et deuxième couronnes 37a, 37c comprend une denture interne 38a, 38c.

La denture interne 38a de la première couronne 37a est également appelée par la suite première denture interne. En outre, la denture interne 38c de la deuxième couronne 37c est également appelée par la suite deuxième denture interne.

Ici et comme illustré à la figure 5, les troisièmes pignons satellites 33c du troisième étage de réduction 25c coopèrent, autrement dit sont configurés pour coopérer, avec la deuxième couronne 37c, dans la configuration assemblée du réducteur 19. La deuxième couronne 37c appartient donc au troisième étage de réduction 25c.

Chaque troisième pignon satellite 33c du troisième étage de réduction 25c est engrené, autrement dit est configuré pour être engrené, avec la deuxième denture interne 38c de la deuxième couronne 37c, dans la configuration assemblée du réducteur 19.

Ainsi, chaque troisième pignon satellite 33c du troisième étage de réduction 25c est en prise, autrement dit est configuré pour être en prise, avec la deuxième denture interne 38c de la deuxième couronne 37c, dans la configuration assemblée du réducteur 19.

Par ailleurs, au moins une partie des premiers et deuxièmes pignons satellites 33a, 33b des premier et deuxième étages de réduction 25a, 25b coopèrent, autrement dit sont configurés pour coopérer, avec la première couronne 37a, dans la configuration assemblée du réducteur 19, en fonction d'un type de train d'engrenage épicycloïdal formé par l'étage de réduction 25a, 25b. La première couronne 37a appartient donc à la fois au premier étage de réduction 25a et au deuxième étage de réduction 25b.

Ainsi, la première denture interne 38a de la première couronne 37a est engrenée, d'une part, avec une partie des premiers pignons satellites 33a du premier étage de réduction 25a et, d'autre part, avec les deuxièmes pignons satellites 33b du deuxième étage de réduction 25b, dans la configuration assemblée du réducteur 19, comme illustré à la figure 5.

Ici et comme illustré à la figure 5, le type de train d'engrenage épicycloïdal formé par le premier étage de réduction 25a est de type 1. En outre, le type de train d'engrenage épicycloïdal formé par le deuxième étage de réduction 25b est de type 2.

Le ou chaque premier ou deuxième pignon satellite 33a, 33b du premier ou deuxième étage de réduction 25a, 25b est engrené, autrement dit est configuré pour être engrené, avec la première denture interne 38a de la première couronne 37a, dans la configuration assemblée du réducteur 19.

Ainsi, le ou chaque premier ou deuxième pignon satellite 33a, 33b du premier ou deuxième étage de réduction 25a, 25b est en prise, autrement dit est configuré pour être en prise, avec la première denture interne 38a de la première couronne 37a, dans la configuration assemblée du réducteur 19.

En variante, non représentée, le réducteur 19 comprend une unique couronne. Dans ce cas, les pignons satellites 33a, 33b, 33c de chaque étage de réduction 25a, 25b, 25c coopèrent, autrement dit sont configurés pour coopérer, avec la couronne, dans la configuration assemblée du réducteur 19. Ainsi, les pignons satellites 33a, 33b, 33c de chaque étage de réduction 25a, 25b, 25c sont engrenés avec la denture interne de l'unique couronne, dans la configuration assemblée du réducteur 19. Dans ce cas, cette unique couronne appartient aux différents étages de réduction 25a, 25b, 25c.

Avantageusement, le troisième étage de réduction 25c comprend un porte-satellites 43c. Le porte-satellites 43c du troisième étage de réduction 25c est également appelé par la suite troisième porte-satellites.

De même, chacun des premier et deuxième étages de réduction 25a, 25b comprend un porte-satellites 43a, 43b. Le porte-satellites 43a du premier étage de réduction 25a est également appelé par la suite premier porte-satellites. En outre, le porte-satellites 43b du deuxième étage de réduction 25b est également appelé par la suite deuxième porte-satellites.

Chaque troisième pignon satellite 33c du troisième étage de réduction 25c comprend au moins une première partie de denture 39 et une deuxième partie de denture 40. Les première et deuxième parties de denture 39, 40 de chaque troisième pignon satellite 33c sont séparées l'une par rapport à l'autre, suivant une direction parallèle à l'axe de rotation X19 du réducteur 19, autrement dit non fixées l'une par rapport à l'autre par un élément additionnel, de sorte à permettre un décalage angulaire α entre celles-ci, lorsque l'arbre d'entrée 24 du réducteur 19 est entraîné en rotation.

Dans le troisième étage de réduction 25c, le troisième pignon planétaire 32c et les troisièmes pignons satellites 33c sont réalisés dans une première matière. En outre, la deuxième couronne 37c est réalisée dans une deuxième matière.

Avantageusement, la première matière du troisième pignon planétaire 32c et des troisièmes pignons satellites 33c est plus rigide que la deuxième matière de la deuxième couronne 37c.

Ainsi, l'utilisation de la première partie de denture 39 séparée de la deuxième partie de denture 40 pour chaque troisième pignon satellite 33c combinée à l'utilisation de la première matière pour le troisième pignon planétaire 32c et les troisièmes pignons satellites 33c et de la deuxième matière pour la deuxième couronne 37c, de rigidités différentes, dans le troisième étage de réduction 25c, permet de garantir une pression de contact répartie de manière uniforme, suivant une longueur de prise L33 de chaque troisième pignon satellite 33c avec le troisième pignon planétaire 32c.

De cette manière, la répartition uniforme de la pression de contact, suivant la longueur de prise L33 de chaque troisième pignon satellite 33c avec le troisième pignon planétaire 32c, est obtenue par la séparation des première et deuxième parties de denture 39, 40 de chaque troisième pignon satellite 33c. Cette séparation des première et deuxième parties de denture 39, 40 de chaque troisième pignon satellite 33c permet le décalage angulaire α entre celles-ci, lorsque l'arbre d'entrée 24 du réducteur 19 est entraîné en rotation, notamment lors d'une activation du moteur électrique 16 de l'actionneur électromécanique 11, en particulier au voisinage d'une zone de contact de chaque troisième pignon satellite 33c avec la deuxième couronne 37c. Ce décalage angulaire α est visible à la figure 7.

Cette répartition uniforme de la pression de contact permet également de pouvoir augmenter la longueur des troisièmes pignons satellites 33c, de sorte à diminuer une contrainte exercée sur ceux-ci et sur le troisième pignon planétaire 32c, et de compenser une raideur en torsion de l'arbre de sortie 26 du réducteur 19 et, plus particulièrement, de l'arbre de sortie 20 de l'actionneur électromécanique 11.

En outre, la répartition uniforme de la pression de contact, suivant la longueur de prise L33 de chaque troisième pignon satellite 33c avec le troisième pignon planétaire 32c, est obtenue par la différence de matière de la deuxième couronne 37c par rapport au troisième pignon planétaire 32c et aux troisièmes pignons satellites 33c et, plus particulièrement, par la souplesse de la deuxième couronne 37c réalisée dans la deuxième matière par rapport à la rigidité du troisième pignon planétaire 32c et des troisièmes pignons satellites 33c réalisés dans la première matière. Cette différence de matière de la deuxième couronne 37c par rapport au troisième pignon planétaire 32c et aux troisièmes pignons satellites 33c permet de déformer de manière accrue la deuxième couronne 37c, lorsque l'arbre d'entrée 24 du réducteur 19 est entraîné en rotation, notamment lors d'une activation du moteur électrique 16 de l'actionneur électromécanique 11.

Cette répartition uniforme de la pression de contact engendre qu'une contrainte exercée sur la deuxième couronne 37c est plus faible que celle exercée sur les troisièmes pignons satellites 33c et le troisième pignon planétaire 32c.

De cette manière, la deuxième couronne 37c peut être réalisée dans une matière plus facile à mettre en forme lors de sa fabrication.

Par ailleurs, une telle construction du troisième étage de réduction 25c du réducteur 19 engendre que les première et deuxième parties de denture 39, 40 de chaque troisième pignon satellite 33c suivent la déformation de la deuxième couronne 37c, lorsque l'arbre d'entrée 24 du réducteur 19 est entraîné en rotation, notamment lors d'une activation du moteur électrique 16 de l'actionneur électromécanique 11.

De cette manière, une telle construction du troisième étage de réduction 25c du réducteur 19 permet d'éviter qu'au moins l'un des troisièmes pignons satellites 33c se mette en biais par rapport à son axe de rotation, lorsque l'arbre d'entrée 24 du réducteur 19 est entraîné en rotation, notamment lors d'une activation du moteur électrique 16 de l'actionneur électromécanique 11.

La rigidité de la première matière du troisième pignon planétaire 32c et des troisièmes pignons satellites 33c et celle de la deuxième matière de la deuxième couronne 37c peuvent être définies par leurs modules d'Young et exprimées en mégapascals (MPa).

La première matière du troisième pignon planétaire 32c et des troisièmes pignons satellites 33c est une matière métallique. En outre, la deuxième matière de la deuxième couronne 37c est une matière plastique.

Ainsi, l'utilisation de la première partie de denture 39 séparée de la deuxième partie de denture 40 pour chaque troisième pignon satellite 33c combinée à l'utilisation d'une matière métallique pour le troisième pignon planétaire 32c et les troisièmes pignons satellites 33c et d'une matière plastique pour la deuxième couronne 37c, dans le troisième étage de réduction 25c, permet de garantir une pression de contact répartie de manière uniforme, suivant la longueur de prise L33 de chaque troisième pignon satellite 33c avec le troisième pignon planétaire 32c.

En outre, la répartition uniforme de la pression de contact, suivant la longueur de prise L33 de chaque troisième pignon satellite 33c avec le troisième pignon planétaire 32c, est obtenue par la souplesse de la deuxième couronne 37c, réalisée dans une matière plastique, par rapport à la rigidité du troisième pignon planétaire 32c et des troisièmes pignons satellites 33c, réalisés dans une matière métallique.

Dans un exemple de réalisation, la matière métallique du troisième pignon planétaire 32c et des troisièmes pignons satellites 33c est un acier fritté.

En variante, la matière métallique du troisième pignon planétaire 32c et des troisièmes pignons satellites 33c est un acier taillé, autrement dit un acier usiné.

Avantageusement, la matière plastique de la deuxième couronne 37c est un polyamide et, plus particulièrement, un polyhexaméthylène adipamide, couramment désigné par le sigle PA6.6.

Le module d'Young Y1 de la première matière du troisième pignon planétaire 32c et des troisièmes pignons satellites 33c est compris entre 100000 et 250000 MPa. En outre, le module d'Young Y2 de la deuxième matière de la deuxième couronne 37c est compris entre 1000 et 20000 MPa.

Avantageusement, les première et deuxième parties de denture 39, 40 de chaque troisième pignon satellite 33c sont distinctes, de sorte à former respectivement une première pièce et une deuxième pièce.

Ainsi, les première et deuxième parties de denture 39, 40 de chaque troisième pignon satellite 33c sont formées par deux pièces distinctes et séparées entre elles.

Avantageusement, chaque troisième pignon satellite 33c présente une première partie de denture 39 et une deuxième partie de denture 40 identiques.

Avantageusement, dans la configuration assemblée du réducteur 19, un espace 41 est ménagé entre la première partie de denture 39 et la deuxième partie de denture 40, suivant une direction parallèle à l'axe de rotation X19 du réducteur 19.

Avantageusement, la première partie de denture 39 comprend une première zone de contact 46. En outre, la deuxième partie de denture 40 comprend une deuxième zone de contact 47. Dans la configuration assemblée du réducteur 19, la première zone de contact 46 de la première partie de denture 39 est en appui contre la deuxième zone de contact 47 de la deuxième partie de denture 40, de sorte à former l'espace 41 entre les dents de la première partie de denture 39 et les dents de la deuxième partie de denture 40.

Ainsi, une telle construction de chaque troisième pignon satellite 33c permet de compenser une raideur en torsion du troisième étage de réduction 25c.

De cette manière, plus l'espace 41 ménagé entre la première partie de denture 39 et la deuxième partie de denture 40 est important, plus un décalage angulaire α important entre celles-ci peut être rattrapé.

Ici et comme illustré à la figure 6, la première zone de contact 46 de la première partie de denture 39 est un premier épaulement. La deuxième zone de contact 47 de la deuxième partie de denture 40 est un deuxième épaulement. Dans la configuration assemblée du réducteur 19, le premier épaulement 46 de la première partie de denture 39 est mis en appui contre le deuxième épaulement 47 de la deuxième partie de denture 40, de sorte à former l'espace 41 entre les dents de la première partie de denture 39 et les dents de la deuxième partie de denture 40.

Avantageusement, chacune des première et deuxième zones de contact 46, 47 des première et deuxième parties de denture 39, 40 est plus proche de l'axe de rotation X19 du réducteur 19 que les dents des première et deuxième parties de denture 39, 40 de chaque troisième pignon satellite 33c en prise avec les dents de la deuxième denture interne 38c de la deuxième couronne 37c, dans la configuration assemblée du réducteur 19.

Ainsi, une telle disposition des première et deuxième zones de contact 46, 47 proches de l'axe de rotation X19 du réducteur 19 permet de minimiser un couple de friction généré entre les première et deuxième parties de denture 39, 40, lorsque l'arbre d'entrée 24 du réducteur 19 est entraîné en rotation, notamment lors d'une activation du moteur électrique 16 de l'actionneur électromécanique 11.

De cette manière, le troisième étage de réduction 25c peut présenter un rendement maximisé.

Avantageusement, l'espace 41 entre la première partie de denture 39 et la deuxième partie de denture 40 de chaque troisième pignon satellite 33c est disposé dans un plan orthogonal, non représenté, à l'axe de rotation X33c du troisième pignon satellite 33c. Ce plan n'est pas représenté afin de faciliter la lecture de la figure 6.

L'espace 41 entre la première partie de denture 39 et la deuxième partie de denture 40 de chaque troisième pignon satellite 33c est de forme annulaire.

Avantageusement, chacune des première et deuxième parties de denture 39, 40 de chaque troisième pignon satellite 33c est une pièce monobloc.

Dans la configuration assemblée du réducteur 19, les première et deuxième parties de denture 39, 40 de chaque troisième pignon satellite 33c sont engrenées, autrement dit configurées pour être engrenées, avec la deuxième denture interne 38c de la deuxième couronne 37c.

Ainsi, chaque troisième pignon satellite 33c du troisième étage de réduction 25c est en prise, autrement dit configuré pour être en prise, avec la deuxième denture interne 38c de la deuxième couronne 37c, dans la configuration assemblée du réducteur 19.

De cette manière, chaque troisième pignon satellite 33c du troisième étage de réduction 25c est engrené, autrement dit configuré pour être engrené, avec une même denture interne 38c de la deuxième couronne 37c, dans la configuration assemblée du réducteur 19.

Autrement dit, la deuxième denture interne 38c de la deuxième couronne 37c comprend une seule partie. En outre, chaque troisième pignon satellite 33c du troisième étage de réduction 25c est engrené, autrement dit configuré pour être engrené, avec cette seule partie de la deuxième denture interne 38c de la deuxième couronne 37c, dans la configuration assemblée du réducteur 19.

Avantageusement, les première et deuxième parties de denture 39, 40 de chaque troisième pignon satellite 33c sont montées libres en rotation autour d'un arbre 42, en particulier de l'axe de rotation du troisième pignon satellite 33c, comme illustré à la figure 5. En outre, l'arbre 42 de chaque troisième pignon satellite 33c est lié au troisième porte-satellites 43c.

Ainsi, les première et deuxième parties de denture 39, 40 de chaque troisième pignon satellite 33c sont solidaires de l'arbre 42.

De cette manière, l'arbre 42 forme une liaison indirecte des première et deuxième parties de denture 39, 40 de chaque troisième pignon satellite 33c.

Dans ce cas, les troisièmes pignons satellites 33c sont dits montés à entraxes fixes par l'intermédiaire des arbres 42 du troisième porte-satellites 43c.

En variante, non représentée, les première et deuxième parties de denture 39, 40 de chaque troisième pignon satellite 33c sont montées flottantes à l'intérieur du troisième porte-satellites 43c, autrement dit sans arbre 42 de liaison entre les première et deuxième parties de denture 39, 40 et le troisième porte-satellites 43c.

Avantageusement, les troisièmes pignons satellites 33c sont répartis angulairement de manière régulière par rapport au troisième porte-satellites 43c, autour de l'axe de rotation X19 du réducteur 19.

Avantageusement, le troisième pignon planétaire 32c, le troisième porte-satellites 43c et la deuxième couronne 37c sont coaxiaux, dans la configuration assemblée du réducteur 19.

Avantageusement, le troisième porte-satellites 43c du troisième étage de réduction 25c est solidaire de l'arbre de sortie 26 du réducteur 19.

Ainsi, le troisième porte-satellites 43c du troisième étage de réduction 25c est entraîné en rotation, en particulier par l'intermédiaire de l'arbre de sortie 26 du réducteur 19, lorsque l'arbre d'entrée 24 du réducteur 19 est entraîné en rotation, notamment lors d'une activation du moteur électrique 16 de l'actionneur électromécanique 11.

Ici et comme illustré aux figures 5 et 6, le troisième porte-satellites 43c du troisième étage de réduction 25c et l'arbre de sortie 26 du réducteur 19 et, plus particulièrement, l'arbre de sortie 20 de l'actionneur électromécanique 11 forment une unique pièce, pouvant être réalisée, par exemple, par moulage. Cette pièce peut être réalisée, notamment, dans une matière plastique ou dans une matière métallique.

En variante, non représentée, le troisième porte-satellites 43c du troisième étage de réduction 25c et l'arbre de sortie 26 du réducteur 19 et, plus particulièrement, l'arbre de sortie 20 de l'actionneur électromécanique 11 forment deux pièces distinctes.

Dans ce cas, dans la configuration assemblée de l'actionneur électromécanique 11, les deux pièces sont reliées, autrement dit configurées pour être reliées, ensemble au moyen d'éléments de fixation, pouvant être démontables.

A titre d'exemples nullement limitatifs, les éléments de fixation peuvent être du type par encliquetage élastique ou par vissage.

Avantageusement, le troisième porte-satellites 43c comprend un plateau 44.

Avantageusement, les arbres 42 des troisièmes pignons satellites 33c sont disposés en saillie d'un même côté du plateau 44 du troisième porte-satellites 43c.

Ainsi, chaque troisième pignon satellite 33c du troisième étage de réduction 25c est monté en porte-à-faux par rapport au plateau 44 du troisième porte-satellites 43c.

Avantageusement, le réducteur 19 comprend un premier couvercle 48a et un deuxième couvercle 48b. Le premier couvercle 48a est disposé au niveau de la première extrémité 19a du réducteur 19. En outre, le deuxième couvercle 48b est disposé au niveau de la deuxième extrémité 19b du réducteur 19.

Avantageusement, dans la configuration assemblée du réducteur 19, le premier couvercle 48a est fixé à la première couronne 37a au moyen de premiers éléments de fixation 49.

Avantageusement, dans la configuration assemblée du réducteur 19, la première couronne 37a est fixée à la deuxième couronne 37c au moyen de deuxièmes éléments de fixation 50.

Avantageusement, dans la configuration assemblée du réducteur 19, la deuxième couronne 37c est fixée au deuxième couvercle 48b au moyen de troisièmes éléments de fixation 51.

Avantageusement, les premiers, deuxièmes et troisièmes éléments de fixation 49, 50, 51 sont des éléments de fixation par encliquetage élastique.

Ici, les premiers, deuxièmes et troisièmes éléments de fixation 49, 50, 51 sont respectivement au nombre de deux et disposés diamétralement opposés par rapport à l'axe de rotation X19 du réducteur 19, autrement dit à 180° l'un par rapport à l'autre, autour de l'axe de rotation X19 du réducteur 19.

Le nombre et le type des premiers, deuxièmes et troisièmes éléments de fixation ne sont pas limitatifs. Ils peuvent être, par exemple, au nombre de trois et disposés avec un angle de 120° l'un par rapport à l'autre, autour de l'axe de rotation du réducteur. Ils peuvent également être, par exemple, des éléments de fixation par vissage.

Avantageusement, le réducteur 19 comprend également une bague de fixation 52. La bague de fixation 52 est fixée, autrement dit configurée pour être fixée, au carter 17 de l'actionneur électromécanique 11 au moyen d'au moins un élément de fixation, non représenté.

Ici et comme illustré à la figure 5, la bague de fixation 52 est disposée entre la première couronne 37a et la deuxième couronne 37c, dans la configuration assemblée du réducteur 19.

Ici, la bague de fixation 52 est fixée au carter 17 au moyen d'une vis de fixation, non représentée, traversant un trou de passage, non représenté, ménagé dans le carter 17 et se vissant dans un trou de fixation 53 de la bague de fixation 52.

Le nombre et le type des éléments de fixation de la bague de fixation au carter ne sont pas limitatifs. Ils peuvent être, par exemple, au nombre de deux ou plus. Ils peuvent être également, par exemple, des éléments de fixation par rivetage.

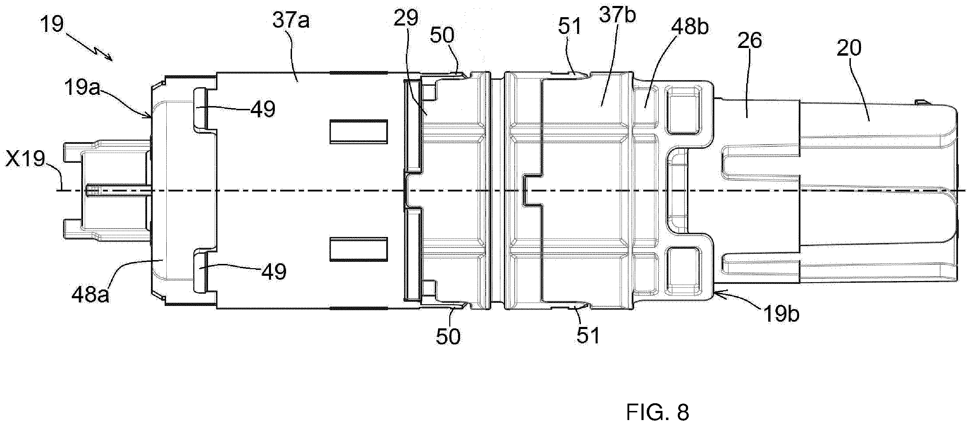

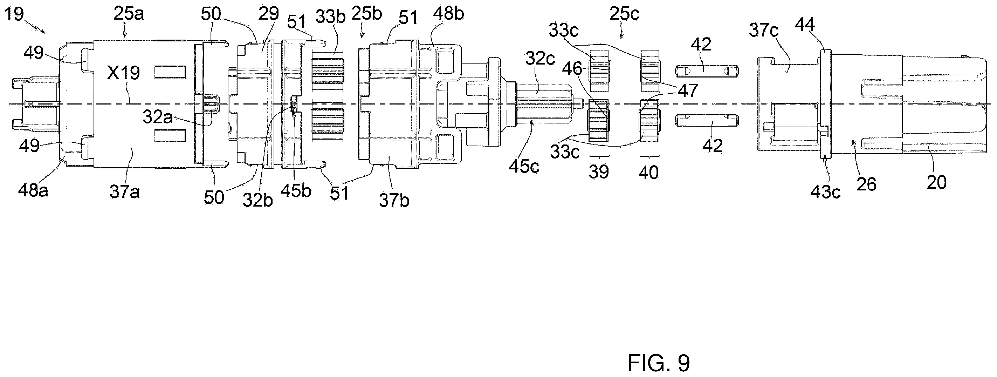

Dans le deuxième mode de réalisation, représenté aux figures 8 et 9, les éléments analogues à ceux du premier mode de réalisation portent les mêmes références et fonctionnent comme expliqué ci-dessus. Dans ce qui suit, on décrit, principalement, que ce qui distingue ce deuxième mode de réalisation du précédent. Dans ce qui suit, lorsqu'un signe de référence est utilisé sans être reproduit sur l'une des figures 8 et 9, il correspond à l'objet portant la même référence sur l'une des figures 1 à 7.

On décrit maintenant, en référence aux figures 8 et 9, le réducteur 19 de l'actionneur électromécanique 11 selon le deuxième mode de réalisation de l'invention.

Comme dans le premier mode de réalisation, le réducteur 19 comprend trois étages de réduction 25a, 25b, 25c. Chacun des trois étages de réduction 25a, 25b, 25c est de type épicycloïdal.

Aux figures 8 et 9, les premiers pignons satellites 33a et le premier porte-satellites 43a du premier étage de réduction 25a ne sont pas visibles. De même, l'arbre d'entrée 24 du réducteur 19 n'est pas représenté sur les figures 8 et 9.

Ici et comme illustré à la figure 9, le frein 29 est disposé entre deux des étages de réduction 25a, 25b, 25c du réducteur 19 et, plus particulièrement, entre le premier étage de réduction 25a et le deuxième étage de réduction 25b.

Avantageusement, le premier pignon planétaire 32a est engrené, autrement dit est configuré pour être engrené, avec un premier pignon, non représenté, d'entrée du frein 29, dans la configuration assemblée du réducteur 19. En outre, le deuxième pignon planétaire 32b est relié, autrement dit configuré pour être relié, au frein 29, par exemple engrené avec un deuxième pignon, non représenté, de sortie du frein 29, dans la configuration assemblée du réducteur 19.

Avantageusement, le réducteur 19 comprend trois couronnes 37a, 37b, 37c. Les trois couronnes 37a, 37b, 37c sont appelées par la suite première couronne 37a, deuxième couronne 37b et troisième couronne 37c.

Chacune des première, deuxième et troisième couronnes 37a, 37b, 37c comprend une denture interne 38a, 38b, 38c, non représentée aux figures 8 et 9.

La denture interne 38a de la première couronne 37a peut également être appelée première denture interne. La denture interne 38b de de la deuxième couronne 37b peut également être appelée deuxième denture interne. En outre, la denture interne 38c de la troisième couronne 37c peut également être appelée par la suite troisième denture interne.

Ainsi, le réducteur 19 comprend autant de couronnes 37a, 37b, 37c que d'étages de réduction 25a, 25b, 25c et chaque couronne 37a, 37b, 37c appartient respectivement à un étage de réduction 25a, 25b, 25c.

Dans ce cas, dans la configuration assemblée du réducteur 19, chaque couronne 37a, 37b, 37c coopère, autrement dit est configurée pour coopérer, uniquement avec les pignons satellites 33a, 33b, 33c de l'un des étages de réduction 25a, 25b, 25c.

Ici, dans le troisième étage de réduction 25c, le troisième pignon planétaire 32c et les troisièmes pignons satellites 33c sont réalisés dans une première matière. En outre, la troisième couronne 37c est réalisée dans une deuxième matière. La première matière du troisième pignon planétaire 32c et des troisièmes pignons satellites 33c est plus rigide que la deuxième matière de la troisième couronne 37c.

Ici, le troisième pignon planétaire 32c, le troisième porte-satellites 43c et la troisième couronne 37c sont coaxiaux, dans la configuration assemblée du réducteur 19.

Ici, le deuxième couvercle 48b est intégré à la deuxième couronne 37b.

Ainsi, le deuxième couvercle 48b et la deuxième couronne 37b forment une unique pièce, pouvant être réalisée, par exemple, par moulage.

Avantageusement, dans la configuration assemblée du réducteur 19, la première couronne 37a est fixée au frein 29 au moyen des deuxièmes éléments de fixation 50.

Avantageusement, dans la configuration assemblée du réducteur 19, le frein 29 est fixé à la deuxième couronne 37b au moyen des troisièmes éléments de fixation 51.

Grâce à la présente invention, quel que soit le mode de réalisation, l'utilisation de la première partie de denture séparée de la deuxième partie de denture pour chaque pignon satellite de l'un des étages de réduction combinée à l'utilisation de la première matière pour le pignon planétaire et les pignons satellites et de la deuxième matière pour la couronne, de rigidités différentes, en particulier dans un même étage de réduction, permet de garantir une pression de contact répartie de manière uniforme, suivant une longueur de prise de chaque pignon satellite avec le pignon planétaire.

De nombreuses modifications peuvent être apportées aux exemples de réalisation décrits précédemment sans sortir du cadre de l'invention défini par les revendications.

En variante, non représentée, chaque troisième pignon satellite 33c comprend au moins une troisième partie de denture. En outre, la troisième partie de denture de chaque troisième pignon satellite 33c est séparée de la deuxième partie de denture, la deuxième partie de denture étant elle-même séparée de la première partie de denture, comme décrit précédemment.

En variante, la première matière du troisième pignon planétaire 32c et des troisièmes pignons satellites 33c est une première matière métallique. En outre, la deuxième matière de la deuxième couronne 37c est une deuxième matière métallique. La première matière métallique du troisième pignon planétaire 32c et des troisièmes pignons satellites 33c est plus rigide que la deuxième matière métallique de la deuxième couronne 37c.

Dans un exemple de réalisation de cette variante, les première et deuxième matières métalliques sont un acier fritté.

Dans un autre exemple de réalisation de cette variante, les première et deuxième matières métalliques sont un acier dit de décolletage.

Selon une autre variante, la première matière du troisième pignon planétaire 32c et des troisièmes pignons satellites 33c est une première matière plastique. En outre, la deuxième matière de la deuxième couronne 37c est une deuxième matière plastique. La première matière plastique du troisième pignon planétaire 32c et des troisièmes pignons satellites 33c est plus rigide que la deuxième matière plastique de la deuxième couronne 37c.

Dans ce cas, les première et deuxième matières plastiques peuvent être choisies, par exemple, parmi les familles de matériaux suivantes : polyoxyméthylène, couramment désignée par le sigle POM, polyamide, couramment désignée par le sigle PA, ou polyéthylène, couramment désignée par le sigle PE, avec ou sans présence de charge.

En variante, non représentée, chaque premier ou deuxième pignon satellite 33a, 33b du premier ou deuxième étage de réduction 25a, 25b peut comprendre au moins une première partie de denture 39 et une deuxième partie de denture 40. Les première et deuxième parties de denture 39, 40 de chaque premier ou deuxième pignon satellite 33a, 33b sont séparées l'une par rapport à l'autre. Dans ce cas, dans le premier ou deuxième étage de réduction 25a, 25b, le premier ou deuxième pignon planétaire 32a, 32b et les premier ou deuxièmes pignons satellites 33a, 33b sont réalisés dans une première matière. En outre, la première couronne 37a est réalisée dans une deuxième matière. La première matière du premier ou deuxième pignon planétaire 32a, 32b et des premiers ou deuxièmes pignons satellites 33a, 33b est plus rigide que la deuxième matière de la première couronne 37a. Ainsi, les caractéristiques décrites précédemment en relation avec le troisième étage de réduction 25c et la deuxième couronne 37c sont applicables soit au premier étage de réduction 25a, soit au deuxième étage de réduction 25b, soit aux premier et deuxième étages de réduction 25a, 25b, ainsi qu'à la première couronne 37a. De cette manière, pour une pluralité d'étages de réduction 25a, 25b, 25c du réducteur 19 ou pour chaque étage de réduction 25a, 25b, 25c du réducteur 19, chaque pignon satellite 33a, 33b, 33c du même étage de réduction 25a, 25b, 25c comprend la première partie de denture 39 et la deuxième partie de denture 40. Les première et deuxième parties de denture 39, 40 de chaque pignon satellite 33a, 33b, 33c sont séparées l'une par rapport à l'autre. En outre, le pignon planétaire 32a, 32b, 32c et les pignons satellites 33a, 33b, 33c du même étage de réduction 25a, 25b, 25c sont réalisés dans la première matière. Et, la couronne 37a, 37c associée à ce même étage de réduction 25a, 25b, 25c est réalisée dans la deuxième matière.

En outre, les modes de réalisation et variantes envisagés peuvent être combinés pour générer de nouveaux modes de réalisation de l'invention, sans sortir du cadre de l'invention défini par les revendications.

## Revendications

1. Actionneur électromécanique (11) pour une installation de fermeture, d'occultation ou de protection solaire (100) comprenant au moins :
un moteur électrique (16), et
un réducteur (19), le réducteur (19) comprenant un arbre d'entrée (24),
le réducteur (19) comprenant au moins un étage de réduction (25a, 25b, 25c) de type épicycloïdal,
ledit au moins un étage de réduction (25c) comprenant au moins :
un pignon planétaire (32c),
une couronne (37c), la couronne (37c) comprenant une denture interne (38c), et
une pluralité de pignons satellites (33c),
le pignon planétaire (32c) coopérant avec chaque pignon satellite (33c) et chaque pignon satellite (33c) étant engrené avec la denture interne (38c) de la couronne (37c),
**caractérisé en ce que** :
chaque pignon satellite (33c) comprend au moins une première partie de denture (39) et une deuxième partie de denture (40), les première et deuxième parties de denture (39, 40) de chaque pignon satellite (33c) étant séparées l'une par rapport à l'autre, suivant une direction parallèle à un axe de rotation (X19) du réducteur (19), de sorte à permettre un décalage angulaire (α) entre celles-ci, lorsque l'arbre d'entrée (24) du réducteur (19) est entraîné en rotation,
le pignon planétaire (32c) et les pignons satellites (33c) sont réalisés dans une première matière,
la couronne (37c) est réalisée dans une deuxième matière,
la rigidité de la première matière du pignon planétaire (32c) et des pignons satellites (33c) est supérieure à la rigidité de la deuxième matière de la couronne (37c), la rigidité de la première matière du pignon planétaire (32c) et des pignons satellites (33c) et la rigidité de la deuxième matière de la couronne (37c) étant définies par les modules d'Young de ces matières,
la rigidité de la première matière du pignon planétaire (32c) et des pignons satellites (33c) et la rigidité de la deuxième matière de la couronne (37c) sont exprimées en mégapascals, le module d'Young de la première matière du pignon planétaire (32c) et des pignons satellites (33c) étant compris entre 100000 et 250000 MPa et le module d'Young de la deuxième matière de la couronne (37c) étant compris entre 1000 et 20000 MPa, et
la première matière du pignon planétaire (32c) et des pignons satellites (33c) est une matière métallique et la deuxième matière de la couronne (37c) est une matière plastique, de telle sorte que la couronne (37c) est déformée de manière accrue, par rapport au pignon planétaire (32c) et aux pignons satellites (33c), lorsque l'arbre d'entrée (24) du réducteur (19) est entraîné en rotation.

2. Actionneur électromécanique (11) pour une installation de fermeture, d'occultation ou de protection solaire (100) selon la revendication 1, **caractérisé en ce que** la matière métallique du pignon planétaire (32c) et des pignons satellites (33c) est un acier fritté.

3. Actionneur électromécanique (11) pour une installation de fermeture, d'occultation ou de protection solaire (100) selon la revendication 1, **caractérisé en ce que** la matière métallique du pignon planétaire (32c) et des pignons satellites (33c) est un acier taillé.

4. Actionneur électromécanique (11) pour une installation de fermeture, d'occultation ou de protection solaire (100) selon l'une quelconque des revendications 1 à 3, **caractérisé en ce que** la matière plastique de la couronne (37c) est un polyamide.

5. Actionneur électromécanique (11) pour une installation de fermeture, d'occultation ou de protection solaire (100) selon l'une quelconque des revendications 1 à 4, **caractérisé en ce que** les première et deuxième parties de denture (39, 40) de chaque pignon satellite (33c) sont distinctes, de sorte à former respectivement une première pièce et une deuxième pièce.

6. Actionneur électromécanique (11) pour une installation de fermeture, d'occultation ou de protection solaire (100) selon la revendication 5, **caractérisé en ce que** la première partie de denture (39) comprend une première zone de contact (46), **en ce que** la deuxième partie de denture (40) comprend une deuxième zone de contact (47) et **en ce que** la première zone de contact (46) de la première partie de denture (39) est en appui contre la deuxième zone de contact (47) de la deuxième partie de denture (40), de sorte à former un espace (41) entre les dents de la première partie de denture (39) et les dents de la deuxième partie de denture (40).

7. Actionneur électromécanique (11) pour une installation de fermeture, d'occultation ou de protection solaire (100) selon la revendication 6, **caractérisé en ce que** chacune des première et deuxième zones de contact (46, 47) des première et deuxième parties de denture (39, 40) est plus proche de l'axe de rotation (X19) du réducteur (19) que les dents des première et deuxième parties de denture (39, 40) de chaque pignon satellite (33c) en prise avec les dents de la denture interne (38c) de la couronne (37c).

8. Actionneur électromécanique (11) pour une installation de fermeture, d'occultation ou de protection solaire (100) selon l'une quelconque des revendications 1 à 7, **caractérisé en ce que** les première et deuxième parties de denture (39, 40) de chaque pignon satellite (33c) sont engrenées avec la denture interne (38c) de la couronne (37c).

9. Installation de fermeture, d'occultation ou de protection solaire (100) comprenant un écran (2) enroulable sur un tube d'enroulement (4) entraîné en rotation par un actionneur électromécanique (11) selon l'une quelconque des revendications 1 à 8.

## Patentansprüche

1. Elektromechanisches Stellglied (11) für eine Schließ-, Abdeck- oder Sonnenschutzanlage (100), zumindest umfassend:
einen Elektromotor (16), und
ein Getriebe (19), das Getriebe (19) umfassend eine Eingangswelle (24), das Getriebe (19) zumindest umfassend eine Getriebestufe (25a, 25b, 25c) vom Planetengetriebetyp,
die zumindest eine Getriebestufe (25c) zumindest umfassend:
ein Sonnenrad (32c),
einen Hohlradkranz (37c), der Hohlradkranz (37c) umfassend eine Innenverzahnung (38c), und
eine Vielzahl von Planetenrädern (33c),
wobei das Sonnenrad (32c) mit jedem Planetenrad (33c) zusammenwirkt und jedes Planetenrad (33c) mit der Innenverzahnung (38c) des Hohlradkranzes (37c) kämmt,
**dadurch gekennzeichnet, dass**:
jedes Planetenrad (33c) zumindest einen ersten Verzahnungsabschnitt (39) und einen zweiten Verzahnungsabschnitt (40) umfasst, wobei der erste und der zweite Verzahnungsabschnitt (39, 40) von jedem Planetenrad (33c) in Bezug aufeinander in einer Richtung parallel zu einer Drehachse (X19) des Getriebes (19) getrennt sind, um einen Winkelversatz (α) dazwischen zu ermöglichen, wenn die Eingangswelle (24) des Getriebes (19) in Drehung versetzt wird,
das Sonnenrad (32c) und die Planetenräder (33c) aus einem ersten Material gefertigt sind,
der Hohlradkranz (37c) aus einem zweiten Material gefertigt ist,
die Steifigkeit des ersten Materials des Sonnenrads (32c) und der Planetenräder (33c) größer ist als die Steifigkeit des zweiten Materials des Hohlradkranzes (37c), wobei die Steifigkeit des ersten Materials des Sonnenrads (32c) und der Planetenräder (33c) und die Steifigkeit des zweiten Materials des Hohlradkranzes (37c) durch die Young-Module dieser Materialien definiert sind,
die Steifigkeit des ersten Materials des Sonnenrads (32c) und der Planetenräder (33c) und die Steifigkeit des zweiten Materials des Hohlradkranzes (37c) in Megapascal ausgedrückt sind, wobei das Young-Modul des ersten Materials des Sonnenrads (32c) und der Planetenräder (33c) zwischen 100.000 und 250.000 MPa liegt und das Young-Modul des zweiten Materials des Hohlradkranzes (37c) zwischen 1000 und 20.000 MPa liegt, und
das erste Material des Sonnenrads (32c) und der Planetenräder (33c) ein metallisches Material ist und das zweite Material des Hohlradkranzes (37c) ein Kunststoffmaterial ist, sodass der Hohlradkranz (37c) gegenüber dem Sonnenrad (32c) und den Planetenrädern (33c) in erhöhtem Maße verformt wird, wenn die Eingangswelle (24) des Getriebes (19) in Drehung versetzt wird.

2. Elektromechanisches Stellglied (11) für eine Schließ-, Abdeck- oder Sonnenschutzanlage (100) nach Anspruch 1, **dadurch gekennzeichnet, dass** das metallische Material des Sonnenrads (32c) und der Planetenräder (33c) ein Sinterstahl ist.

3. Elektromechanisches Stellglied (11) für eine Schließ-, Abdeck- oder Sonnenschutzanlage (100) nach Anspruch 1, **dadurch gekennzeichnet, dass** das metallische Material des Sonnenrads (32c) und der Planetenräder (33c) ein zerspanter Stahl ist.

4. Elektromechanisches Stellglied (11) für eine Schließ-, Abdeck- oder Sonnenschutzanlage (100) nach einem der Ansprüche 1 bis 3, **dadurch gekennzeichnet, dass** das Kunststoffmaterial des Hohlradkranzes (37c) ein Polyamid ist.

5. Elektromechanisches Stellglied (11) für eine Schließ-, Abdeck- oder Sonnenschutzanlage (100) nach einem der Ansprüche 1 bis 4, **dadurch gekennzeichnet, dass** der erste und der zweite Verzahnungsabschnitt (39, 40) von jedem Planetenrad (33c) voneinander getrennt sind, um jeweils ein erstes Teil und ein zweites Teil zu bilden.

6. Elektromechanisches Stellglied (11) für eine Schließ-, Abdeck- oder Sonnenschutzanlage (100) nach Anspruch 5, **dadurch gekennzeichnet, dass** der erste Verzahnungsabschnitt (39) einen ersten Kontaktbereich (46) umfasst, dass der zweite Verzahnungsabschnitt (40) einen zweiten Kontaktbereich (47) umfasst und dass der erste Kontaktbereich (46) des ersten Verzahnungsabschnitts (39) an dem zweiten Kontaktbereich (47) des zweiten Verzahnungsabschnitts (40) anliegt, um einen Raum (41) zwischen den Zähnen des ersten Verzahnungsabschnitts (39) und den Zähnen des zweiten Verzahnungsabschnitts (40) zu bilden.

7. Elektromechanisches Stellglied (11) für eine Schließ-, Abdeck- oder Sonnenschutzanlage (100) nach Anspruch 6, **dadurch gekennzeichnet, dass** jeder von dem ersten und dem zweiten Kontaktbereich (46, 47) des ersten und des zweiten Verzahnungsabschnitt (39, 40) näher an der Drehachse (X19) des Getriebes (19) ist als die Zähne des ersten und des zweiten Verzahnungsabschnitts (39, 40) von jedem Planetenrad (33c), die mit den Zähnen der Innenverzahnung (38c) des Hohlradkranzes (37c) eingreifen.

8. Elektromechanisches Stellglied (11) für eine Schließ-, Abdeck- oder Sonnenschutzanlage (100) nach einem der Ansprüche 1 bis 7, **dadurch gekennzeichnet, dass** der erste und der zweite Verzahnungsabschnitt (39, 40) von jedem Planetenrad (33c) mit der Innenverzahnung (38c) des Hohlradkranzes (37c) kämmen.

9. Schließ-, Abdeck- oder Sonnenschutzanlage (100), umfassend einen Schirm (2), der auf ein Wickelrohr (4) aufwickelbar ist, das durch ein elektromechanisches Stellglied (11) nach einem der Ansprüche 1 bis 8 in Drehung versetzt wird.

## Claims

1. An electromechanical actuator (11) for a closure, concealment or solar protection installation (100) comprising at least:
an electric motor (16), and
a gearbox (19), the gearbox (19) comprising an input shaft (24),
the gearbox (19) comprising at least one epicyclic type reduction stage (25a, 25b, 25c), said at least one reduction stage (25c) comprising at least:
a sun gear (32c),
a ring gear (37c), the ring gear (37c) comprising an internal toothing (38c), and
a plurality of planet gears (33c),
the sun gear (32c) cooperating with each planet gear (33c) and each planet gear (33c) being meshed with the internal toothing (38c) of the ring gear (37c),
**characterized in that**:
each planet gear (33c) comprises at least a first toothed part (39) and a second toothed part (40), the first and second toothed parts (39, 40) of each planet gear (33c) being separated relative to one another, according to a direction parallel to an axis of rotation (X19) of the gearbox (19), so as to allow an angular offset (α) between them, when the input shaft (24) of the gearbox (19) is driven in rotation,
the sun gear (32c) and the planet gears (33c) are realized in a first material,
the ring gear (37c) is realized in a second material,
the rigidity of the first material of the sun gear (32c) and of the planet gears (33c) is greater than the rigidity of the second material of the ring gear (37c), the rigidity of the first material of the sun gear (32c) and of the planet gears (33c) and the rigidity of the second material of the ring gear (37c) being defined by the Young's modulus of these materials,
the rigidity of the first material of the sun gear (32c) and of the planet gears (33c) and the rigidity of the second material of the ring gear (37c) are expressed in megapascals, the Young's modulus of the first material of the sun gear (32c) and of the planet gears (33c) being between 100000 and 250000 MPa and the Young's modulus of the second material of the ring gear (37c) being between 1000 and 20000 MPa, and
the first material of the sun gear (32c) and of the planet gears (33c) is a metallic material and the second material of the ring gear (37c) is a plastic material, such that the ring gear (37c) is deformed to a greater extent, relative to the sun gear (32c) and to the planet gears (33c), when the input shaft (24) of the gearbox (19) is driven in rotation.

2. The electromechanical actuator (11) for a closure, concealment or solar protection installation (100) according to claim 1, **characterized in that** the metallic material of the sun gear (32c) and of the planet gears (33c) is a sintered steel.

3. The electromechanical actuator (11) for a closure, concealment or solar protection installation (100) according to claim 1, **characterized in that** the metallic material of the sun gear (32c) and of the planet gears (33c) is a machined steel.

4. The electromechanical actuator (11) for a closure, concealment or solar protection installation (100) according to any one of claims 1 to 3, **characterized in that** the plastic material of the ring gear (37c) is a polyamide.

5. The electromechanical actuator (11) for a closure, concealment or solar protection installation (100) according to any one of claims 1 to 4, **characterized in that** the first and second toothed parts (39, 40) of each planet gear (33c) are distinct, so as to form respectively a first piece and a second piece.

6. The electromechanical actuator (11) for a closure, concealment or solar protection installation (100) according to claim 5, **characterized in that** the first toothed part (39) comprises a first contact zone (46), **in that** the second toothed part (40) comprises a second contact zone (47) and **in that** the first contact zone (46) of the first toothed part (39) is in abutment against the second contact zone (47) of the second toothed part (40), so as to form a space (41) between the teeth of the first toothed part (39) and the teeth of the second toothed part (40).

7. The electromechanical actuator (11) for a closure, concealment or solar protection installation (100) according to claim 6, **characterized in that** each of the first and second contact zones (46, 47) of the first and second toothed parts (39, 40) is closer to the axis of rotation (X19) of the gearbox (19) than the teeth of the first and second toothed parts (39, 40) of each planet gear (33c) meshing with the teeth of the internal toothing (38c) of the ring gear (37c).

8. The electromechanical actuator (11) for a closure, concealment or solar protection installation (100) according to any one of claims 1 to 7, **characterized in that** the first and second toothed parts (39, 40) of each planet gear (33c) are meshed with the internal toothing (38c) of the ring gear (37c).

9. A closure, concealment or solar protection installation (100) comprising a screen (2) that can be wound onto a winding tube (4) driven in rotation by an electromechanical actuator (11) according to any one of claims 1 to 8.
